# EUROPÄISCHE PATENTSCHRIFT

(11) **EP 1 333 906 B1**
(45) Veröffentlichungstag und Bekanntmachung des Hinweises auf die Patenterteilung: **30.08.2006**
(21) Anmeldenummer: 01976311.9
(22) Anmeldetag: 13.10.2001
(51) Int. Cl.: B01D 39/04, B01D 39/06

(54) **VERWENDUNG VON POLYMERISATEN ALS FILTERHILFS- UND/ODER STABILISIERUNGSMITTEL**
USE OF POLYMERS AS FILTERING AIDS AND/OR STABILIZERS
UTILISATION DE POLYMERES EN TANT QU'AUXILIAIRES DE FILTRATION ET / OU STABILISANTS

(30) Priorität: 16.10.2000 DE 10051266
(43) Veröffentlichungstag der Anmeldung: 13.08.2003
(73) Patentinhaber: BASF Aktiengesellschaft, 67056 Ludwigshafen (DE)
(72) Erfinder: DROHMANN, Christian, 67105 Schifferstadt (DE); WITTELER, Helmut, 67157 Wachenheim (DE); SANNER, Axel, 67227 Frankenthal (DE); ZIEHL, Jürgen, 67117 Limburgerhof (DE); HAMM DE BANTLEON, Elisa, 80634 München (DE); PETSCH, Tobias, 55758 Mörschied (DE); MATHAUER, Klemens, 69115 Heidelberg (DE); LEBTIG, Barbara, 74360 Ilsfeld (DE)
(86) Internationale Anmeldenummer: PCT/EP2001/011861
(87) Internationale Veröffentlichungsnummer: WO 2002/032544

(56) Entgegenhaltungen:
- WO-A-96/35497
- US-A- 4 344 846
- US-A- 4 820 420
- US-A- 5 484 620
- PATENT ABSTRACTS OF JAPAN vol. 004, no. 159 (C-030), 6. November 1980 (1980-11-06) & JP 55 104650 A (TOMITA SEIYAKU KK;OTHERS: 01), 11. August 1980 (1980-08-11)

## Beschreibung

Die vorliegende Erfindung betrifft die Verwendung von Polystyrolenthaltenden Compounds als Filterhilfs- und/oder Stabilisierungssmittel für die Filtration bzw. Stabilisierung von wäßrigen Flüssigkeiten, sowie neue teilchenförmige in Wasser unlösliche, wenig quellbare Compounds.

Die Trennung von fest-flüssigen Stoffgemischen über Filtration ist in vielen industriellen Produktionsprozessen ein wichtiger Verfahrensschritt. Unter dem Begriff Filterhilfsmittel versteht man eine Reihe von Produkten, die in loser, pulvriger, granulierter oder faseriger Form als Anschwemmmaterial in der Filtration eingesetzt wird.

Filterhilfsmittel kann man vor Beginn der Filtration als Filterhilfsschicht (Anschwemmfilter) auf das Filterhilfsmittel aufbringe, um einen lockeren Kuchenaufbau zu erzielen, oder kontinuierlich der zu filternden Trübe zusetzen.

Bekannte Filtrierzusatzstoffe sind beispielsweise Diatomeen, Naturalprodukte, die aus der Kalzinierung von Diatomit hervorgehen. Die Hauptbestandteile sind amorphe SiO₂ - Modifikationen, begleitet von Oxiden des Aluminiums, Eisens und anderer Elemente sowie deren silikatische Verbindungen. Perlite sind geglühte, gemahlene selektierte Blähtone vulkanischen Ursprungs (Rhyolite). Die Struktur ist blättchenförmig und chemisch als ein Natrium-, Kalium-, Aluminium-Silikat zu beschreiben. Bentonite sind Tonmineralien mit einer hohen Quell- und Absorptionsfähigkeit.

Filterhilfsstoffe sollten während der Filtration ein poröses Milieu bilden, dass die zu beseitigenden Unreinheiten aufnimmt und den Abfluss der flüssigen Phase erleichtert.

Die Zusatzstoffe sollten eine erhöhte Porosität haben und sollten sich auch unter Druckeinfluss nicht verformen. Ausserdem sollten die Stoffe chemisch inert und leicht zurückgewinnbar sein.

Für das Filtrieren von Bier werden gegenwärtig überwiegend Kieselgur-Anschwemm- sowie Schichtenfilter benutzt. Bei der Anschwemmfiltration wird vor Filtrationsbeginn auf einer Stützfläche (Filtergebe) eine Kieselgur-Vorschicht angeschwemmt. Nach Anschwemmen dieser Vorschicht wird dem zu filtrierenden Bier (Un-filtrat) ein Gemisch aus feiner und grober Kieselgur zudosiert. Bei der Bierproduktion muss mit einem Kieselgurverbrauch von 150 bis 200 g/hl Bier gerechnet werden. Für die Anschwemmfiltration hat sich Kieselgur besonders wegen seines grossen Porenvolumens, seines niedrigen Schüttgewichtes, seiner höheren Saugfähigkeit und seiner grossen spezifischen Oberfläche bewährt.

Ein Nachteil bei der Verwendung von Kieselgur ist, dass es nach einer Anzahl von Filterbetriebsstunden durch zurückgehaltenes Feststoffmaterial in seiner Wirksamkeit verbraucht ist und von den Stützflächen der Filter entfernt und ausgetauscht werden muss.

Das Deponieren des verbrauchten Kieselgurs ist aufgrund gesetzlicher Vorschriften nur mit grossen Schwierigkeiten und Kostenaufwand möglich. Versuche, das als Filtermaterial unbrauchbare Kieselgur zu regenerieren erwiesen sich als in der Praxis nicht durchführbar. Zusätzlich ist Kieselgur seit einiger Zeit wegen seiner eventuell krebserzeugenden Wirkung in Diskussion.

Auch die Abtrennung von Trübung verursachenden Substanzen wie gelösten Polyphenolen oder Proteinen ist in vielen Getränkeproduktionsprozessen ein wichtiger Verfahrensschritt, weil die Entfernung dieser Stoffe zu einer längeren Haltbarkeit der Getränke führt.

Die Stabilisierung kann durch die Zugabe von Stoffen erfolgen, die die Trübung verursachenden Substanzen binden, fällen oder in sonst geeigneter Weise aus dem Medium entfernen. Zu diesen Stoffen gehören z.B. das Kieselgel, das Proteine bindet bzw. fällt, oder Polyvinylpyrrolidon, das Polyphenole bindet.

Bislang werden Filterhilfsmittel und Stabilisierungsmittel getrennt oder zusammen eingesetzt. Im ersten Fall bedeutet dies jedoch apparativen Aufwand im zweiten Fall ist die gemeinsame Entsorgung problematisch, zudem ist es bei den bisher eingesetzten Stoffen nicht möglich die Absorption zu regulieren.

EP 351 363 beschreibt hochvernetzte Polyvinylpolypyrrolidone (PVPP) als Stabilisierungs- und Filterhilfsmittel. Bei der Verwendung von Polyvinylpolypyrrolidon allein ist es jedoch schwierig, die Absorption einzustellen.

In US 4344846 wird eine Methode zur Anschwemmfiltration mit Filterhilfsmitteln auf Basis expandierten Polystyrols beschrieben.

WO 96/35497 beschreibt regenerierbare Filterhilfsmittel für die Filtration eines flüssigen Mediums, insbesondere Bier, die Körnchen synthetischer oder natürlicher Polymere umfassen, die einen Filterkuchen mit einer Porosität zwischen 0,3 und 0,5 bilden.

Aufgabe der Erfindung war es ein Filterhilfs- bzw. Stabilisierungsmittel bereitzustellen, dass anstelle von Kieselgur bei der Filtration bzw. Stabilisierung von wäßrigen Flüssigkeiten, insbesondere in der Bier- und Getränkeherstellung verwendet werden kann. Es sollte sowohl als Filterhilfsmittel als auch als Stabilisierungsmittel allein aber auch sowohl als auch für beide Funktionen einsetzbar sein. Es sollte unlöslich und nur wenig quellbar, chemisch inert und oberflächenreich sein, sowie einfach und in akzeptablen Reaktionszeiten herstellbar sein. Weiterhin sollte es möglich sein, die Absorption gezielt einzustellen und es sollte regenerierbar sein.

Diese Aufgabe wurde überraschend durch die Verwendung von Polystyrol-enthaltenden Compounds gelöst.

Gegenstand der Erfindung ist die Verwendung von Compounds enthaltend
(a) 20-95 Gew.-% Polystyrol
(b) 80-5 Gew.-% vernetztes Polyvinylpolypyrrolidon (PVPP), sowie gegebenenfalls weitere Zuschlagstoffe
als Filterhilfs- und/oder Stabilisierungsmittel zur Filtration und/oder Stabilisierung einer wäßrigen Flüssigkeit.

Ein weiterer Gegenstand der Erfindung ist ein Verfahren zur Filtration und/oder Stabilisierung einer wäßrigen Flüssigkeit, dadurch gekennzeichnet, daß man ein Polymerisat als Filterhilfs- bzw. Stabilisierungsmittel enthaltend
(a) 20-95 Gew.-% Polystyrol
(b) 80-5 Gew.-% vernetztes Polyvinylpolypyrrolidon (PVPP), sowie gegebenenfalls weitere Zuschlagstoffe einsetzt.

Das Verfahren kann dabei so ausgeführt werden, daß nur jeweils eine Filtration oder eine Stabilisierung des wäßrigen Mediums stattfindet, oder aber, daß neben der Filtration eine gleichzei-tige Stabilisierung erfolgt. Bevorzugt findet neben der Filtration auch eine Stabilisierung statt.

Bei der Filtration wird bevorzugt die Technik der Anschwemmfiltration verwendet.

Überraschenderweise läßt sich durch die erfindungsgemäßen Compounds die Absorption beispielsweise der die Trübung in Getränken verursachenden Inhaltsstoffe gezielt einstellen.

Werden, z.B. im Falle von Bier die darin enthaltenen Polyphenole komplett entfernt, verliert das Bier dadurch auch seine Geschmacksstoffe.

Ein weiterer Vorteil der Verwendung der erfindungsgemäßen Compounds ist ihre Regenerierbarkeit.

Unter den unter (a) genannten Polystyrolderivaten versteht man Polystyrole die gegebenenfalls durch organische Resten wie Alkyl, Aryl, Alkylaryl, Cycloalkyl oder Alkoxy und/oder gegebenenfalls mit funktionellen Gruppen wie basischen Gruppen, z.B. Amingruppen, sauren Gruppen, z.B. Sulfonsäuregruppen, oder deren Konjugaten, z.B. Ammoniumgruppen, Sulfonate, Carboxylate, die am aromatischen Styrolring oder den organischen Resten hängen können substituiert sein können.

Unter dem Begriff "Polystyrole" soll die gesamte Gruppe der "Styrolpolymere" wie sie in *A. Echte; Handbuch der Technischen Polymerchemie; VCH, Weinheim, 1993* beschrieben ist, verstanden werden. Diese Definition umfaßt eine Gruppe von thermoplastischen Werkstoffen: Homo-Polystyrol, Copolymere des Styrols, vor allem mit Acrylnitril, aber auch mit Maleinsäureanhydrid, Methylmethacrylat und ähnlichen Comonomeren, sowie deren mit Kautschuken schlagzäh modifizierten Abwandlungen.

Die Polystyrole (a) werden im Rahmen der Erfindung in Mengen von 20 - 95 Gew.-%, bevorzugt 40 -90 Gew.-%, insbesonders bevorzugt 60 -90 Gew.-% bezogen auf die Gesamtmenge des Filterhilfsstoffes eingesetzt.

Unter den Carbonaten der unter (b) aufgeführte weitere Stoffe versteht man Alkali- oder Erdalkalicarbonate, Alkali- oder Erdalkalihydrogencarbonate, bevorzugt Kalziumcarbonat, Natriumhydrogencarbonat oder Kaliumhydrogencarbonat. Unter den Oxiden versteht man Oxide oder Mischoxide der 4. Nebengruppe oder der 3. Hauptgruppe, bevorzugt Titanoxid oder Aluminiumoxid.

Unter den Silikaten versteht man sonstige nicht ausdrücklich vorher genannte natürliche und künstliche Silikate; dazu gehören auch Mischsilikate wie Alumosilikate oder auch Zeolithe.

Als weitere Polymere der unter (b) aufgeführte weitere Stoffe werden bevorzugt Polyamid oder vernetztes Polyvinyllactam und/oder Polyvinylamin eingesetzt. Als Polyvinyllactam und/oder Polyvinylamin sind bevorzugt: Polyvinylpyrrolidon, Polyvinylpiperidon, Polyvinylcaprolactam, Polyvinylimidazol, Polyvinyl-2-Methylimidazol, Polyvinyl-4-Methylimidazol, Polyvinylformamid. Besonders bevorzugt wird hochvernetztes Polyvinylpolypyrrolidon, beispielsweise das unter dem Markennamen erhältliche Divergan® F eingesetzt.

Dieses wird üblicherweise durch die sogenannte Popcornpolymerisation erhalten. Dabei handelt es sich um eine Polymerisationsmethode, bei der die wachsenden Polymerketten miteinander vernetzen. Dies kann in An- oder Abwesenheit eines Vernetzers geschehen.

Vernetzer sind Verbindungen, die mindestens zwei ethylenisch ungesättige nichtkonjugierte Doppelbindungen im Molekül erhalten. Bevorzugte Vernetzer sind Divinylbenzol, N,N'-Divinylethylenharnstoff, N,N'-Divinylpropylharnstoff, Alkylenbisacrylamide, Alkylenglycoldi (meth) acrylate.

Das Endprodukt der "Popcorn"-Polymerisation ist ein schaumiges, krustiges, körniges Polymerisat mit Blumenkohl-artiger Struktur. Aufgrund ihrer meist starken Vernetzung sind Popcornpolymerisate in der Regel unlöslich und kaum quellbar.

Das unter (b) vernetzte Polyvinylpolypyrrolidon (PVPP) kann sowohl allein als auch in Gemischen mit weiteren Zuschlagstoffen in dem Filterhilfsstoff enthalten sein. Als Zuschlagsstoffe werden bevorzugt, TiO₂, KHCO₃, NaHCO₃, CaCO₃, Kieselgel, Kieselgur, Diatomeenerde oder Bentonit eingesetzt. Bevorzugt werden Gemische von vernetztem Polyvinylpolypyrrolidon (PVPP) mit TiO₂, NaHCO₃, KHCO₃, CaCO₃, Kieselgel, Kieselgur, Diatomeenerde oder Bentonit oder Gemische von NaHCO₃ oder KHCO₃ mit CaCO₃, TiO₂, Kieselgel, Kieselgur, Diatomeenerde oder Bentonit oder aber Gemische von TiO₂ mit NaHCO₃, KHCO₃, CaCO₃, Kieselgel, Kieselgur, Diatomeenerde oder Bentonit eingesetzt.

Die eingesetzten Polystyrole können nach an sich bekannten Verfahren hergestellt werden. Solche Verfahren sind beispielsweise in *A. Echte; Handbuch der Technischen Polymerchemie; VCH, Weinheim, 1993* beschrieben.

Zur Herstellung der Polymerpulver werden Polystyrol und wenigstens vernetztes Polyvinylpolypyrrolidon (PVPP) in einem Extruder compoundiert.

Unter Compoundieren versteht man allgemein das Mischen eines Polymers mit wenigstens einem Zusatzstoff (*Der Doppelschneckenextruder* : *Grundlagen- und Anwendungsgebiete, Herausg. : VDI-Gesellschaft Kunststofftechnik.-Düsseldorf : VDI-Verlag, 1995*, *Kapitel* 7 und *Aufbereiten von Polymeren*) *mit neuartigen Eigenschaften, Herausg.: VDI-Gesellschaft Kunststofftechnik.-Düsseldorf : VDI-Verlag, 1995, S. 135ff.)*.Das Aufbereiten von Polymeren durch Füllen und Verstärken wird z.B. bei den Polyolefinen und Polystyrol zur gezielten Verbesserung der Eigenschaften und Senken der Herstellkosten durchgeführt. Die Füllstoffe lassen sich gemäß ihrer Partikelgeometrie nach dem sog. Aspect Ratio unterscheiden. Bei einem Wert kleiner als zehn ist der Stoff ein reiner Füllstoff (Extender), erst bei höheren Werten wird üblicherweise eine Verstärkungswirkung erreicht. Dieser Effekt kann durch ausgeprägte Haftkräfte zwischen Zusatzstoff und Polymer verstärkt werden. Häufig eingesetzte Füllstoffe sind Calciumcarbonat (Kreide) und Talkum. Aufgrund der Lebensmittelzulassung hat mit Calciumcarbonat gefülltes Polypropylen auch für Lebensmittelverpackungen (Spritzguß, Tiefziehen) breite Anwendung gefunden. Weiterhin beschrieben ist das Füllen von Polypropylen mit Holzmehl für Platten, die im Automobilbau eingesetzt werden. Weiterhin üblich sind Glas (z.B. in Kugelform), Asbest, Silikate (z.B. Wollastonit), Glimmer, Spate und Graphit. Ein üblicher Anteil an Füllstoff beträgt 20-80 Masse-%, kann aber auch bis zu 95% betragen. Durch das Verstärken von thermoplastischen Kunststoffen mit Faserstoffen werden die mechanischen Eigenschaften, besonders die Steifigkeit und Härte des Kunststoffs erhöht. Üblicherweise werden als Faserstoffe Glasfasern, Kohlenstoffasern, Stahlfasern und Aramidfasern verwendet. Durch das Mischen wenigstens zweier Kunststoffe, dem Legieren, erhält man Polymere mit einem anderen Eigenschaftsprofil. Die Gemische können homogen, heterogen oder teilweise bzw. begrenzt verträglich sein.

In allen Fällen ist die Verwendung von Extrudern, insbesondere Zweischneckenextrudern bevorzugt. Daneben treten aber auch sog. Ko-Kneter auf.

Üblicherweise treten bei der Extrusion Temperaturen und Drücke auf, die neben der rein physikalischen Mischung eine chemische Umsetzung, d.h. eine chemische Veränderung der Einsatzkomponenten, ermöglichen können.

Umsetzung im Sinne der Erfindung beschreibt einen Prozeß, bei dem wenigstens zwei Stoffe physikalisch und/oder chemisch miteinander umgesetzt werden.

Die Umsetzung kann auch durch übliche Verfahren zur thermoplastischen Verarbeitung, insbesondere Mischen, Dispergieren, Füllen, Verstärken, Legieren, Entgasen stattfinden und die reaktive Aufbereitung, durch Walzen, Kneten, Gießen, Sintern, Pressen, Compoundierung, Kalandrierung, Strangpressen oder Extrusion oder Kombination dieser Methoden. Bevorzugt werden die Polymerpulver aber in einem Extruder compoundiert.

Unter dem Begriff der Filtration versteht man das Durchströmen eines porösen Filtermittels durch eine Suspension (Trübe), bestehend aus einer diskontinuierlichen Phase (dispergierte Stoffe) und einer kontinuierlichen Phase (Dispersionsmittel). Dabei werden Feststoffteilchen auf dem Filtermittel abgelagert und die filtrierte Flüssigkeit (Filtrat) verläßt das Filtermittel klar. Als äußere Kraft zur Überwindung des Strömungswiderstandes wirkt hierbei eine angelegte Druckdifferenz.

Man kann beim Filtrationsvorgang grundsätzlich verschieden Mechanismen der Feststoffabscheidung beobachten. Hauptsächlich handelt es sich hierbei um eine Oberflächen- oder Kuchenfiltration, I Schichtenfiltration sowie Siebfiltration. Häufig hat man es mit einer Kombination aus wenigstens zwei Vorgängen zu tun.

Im Falle der Oberflächen- oder Kuchenfiltration kommen sogenannte Anschwemmfilter in verschiedenen Ausführungen für die Getränkefiltration zur Anwendung (Kunze, Wolfgang, Technologie Brauer und Mälzer, 7. Auflage, 1994, S. 372). Allen Anschwemmsystemen gemeinsam, werden die in der zu filtrierenden Flüssigkeit enthaltenen Feststoffe und auch die absichtlich zudosierten Feststoffe (Filterhilfsmittel) durch ein Filtermedium zurückgehalten, wobei sich ein Filterkuchen aufbaut. Dieser ist im Verlauf der Filtration ebenso wie das Filtermittel zu durchströmen. Eine solche Filtration wird auch als Anschwemmfiltration bezeichnet.

Unter den erfindungsgemäß zu filternden und/oder zu stabilisierenden Flüssigkeiten versteht man Fruchtsäfte oder Gärungsgetränke, wie Wein oder Bier. Insbesondere wird das erfindungsgemäße Verfahren zur Filtration und/oder Stabilisierung von Bier verwendet.

Die erfindungsgemäß bereitgestellten Filterhilfs- bzw. Stabilisierungsmittel zeichnen sich durch gute Benetzbarkeit mit Wasser und konstanter Durchflußrate bei gleichzeitig guter Filtrierwirkung aus.

Die Filterhilfsmittel werden nach dem Mischprozess durch Techniken der Granulierung des Schrotens und/oder Mahlens, bevorzugt durch eine Aufeinanderfolge von Granulierung und Mahlen zerkleinert. Bei der Temperaturführung eines Kaltmahlprozesses kann Wasser im Endprodukt verbleiben.

Die erhaltenen Pulver weisen eine mittlere Korngröße zwischen 1 und 1000 µm, bevorzugt zwischen 2 und 200 µm auf. Sie besitzen entweder eine regelmäßige oder unregelmäßige Struktur, die sphäroid oder nichtsphäroid sein kann. Bevorzugt sind die erhaltenen Pulver jedoch nichtsphäroid.

Die folgenden Beispiele sollen die Erfindung näher erläutern, ohne sie jedoch darauf einzuschränken.

### A) Herstellung von Polymerpulvern

Polystyrol und wenigstens vernetztes Polyvinylpolypyrrolidon (PVPP) (Gesamtmenge ca. 10 kg) werden in einem Extruder compoundiert. Das Extrudat wird im Wasserbad abgekühlt und granuliert. Das erhaltene Granulat wird in einer Pralltellermühle zerkleinert und mit einem Vibrationstaumelsieb abgesiebt.

Die Gewichtsverhältnisse, in denen Polystyrol und vernetztes Poylyvinylpolypyrrolidon (PVPP) und weitere Zuschlagstoffe (Stoff 1, evtl. auch Stoff 2) compoundiert worden sind, gibt die folgende Tabelle an. Hinter dem Gewichtsverhältnis ist in Klammern die Probenkennung angegeben.

| # | Stoff 1 | Stoff 2 | Verhältnis PS : Stoff 1 (evtl. :Stoff2) |
|---|---|---|---|
| 1 | Kieselgur | - | 20:80 (1a); 50:50 (1b); 80:20 (1c); 90:10 (1d) |
| 2 | CaCO₃ | - | 40:60 (2a); 60:40 (2b); 70:30 (2c); 80:20 (2d) |
| 3 | TiO₂ | - | 50:50 (3a); 60:40 (3b); 70:30 (3c); 80:20 (3d) |
| 4 | PVPP | - | 20:80 (4a); 40:60 (4b); 60:40 (4c); 70:30 (4d) ; 80:30 (4e); 90:10 (4f) |
| 5 | NaHCO₃ | - | 90:10 (5a); 95:5 (5b) ; 98:2 (5c) ; 99 : 1 (5d) |
| 6 | Kieselgel | - | 50:50 (6a); 60:40 (6b); 80:20 (6c); 90:10 (6d), |
| 7 | Bentoni t | - | 50:50 (7a); 60:40 (7b); 70:30 (7c); 80:20 (7d) |
| 8 | PVPP | TiO₂ | 50:40:10 (8a); 70:20:10 (8b) |
| 9 | PVPP | NaHCO₃ | 50:45:5 (9a); 80:18:2 (9b) |
| 10 | PVPP | CaCO₃ | 50:40:10 (10a); 70:20:10 (10b) |
| 11 | PVPP | Kieselgur | 40:40:20 (11a); 60:20:20 (11b); 70:20:10 (11c) |
| 12 | PVPP | Kieselgel | 70:25:5 (12a); 70:28:2 (12b) |
| 13 | CaCO₃ | NaHCO₃ | 70:25:5 (13a); 80:18:2 (13b) |
| 14 | CaCO₃ | Kieselgur | 60:20:20 (14a); 80:10:10 (14b) |
| 15 | CaCO₃ | Kieselgel | 70:20:10 (15a); 80:15:5 (15b) |
| 16 | TiO₂ | NaHCO₃ | 75:20:5 (16a);78:20:2 (16b) |
| 17 | TiO₂ | Kieselgur | 70:20:10 (17a); 80:10:10 (17b) |
| 18 | TiO₂ | Kieselgel | 70:20:10 (18a); 80:15:5 (18b) |

| | | | |
|---|---|---|---|
| Beispiele 1-3, 5-7, 13-18 stellen keine erfindungsgemäße Beispiele dar. | | | |

Es bedeuten dabei:
PS: Polystyrol 486M, BASF AG
Kieselgur: Kieselgur, Merck, CAS-Nr. 68855-54-9;
CaC0₃: Calciumcarbonat (gefällt,reinst), Merck, CAS-Nr. 471-34-1;
TiO₂: Titandioxid (<325mesh, 99%), Aldrich, CAS-Nr. 1317-70-0;
PVPP: Divergan F, BASF, CAS-Nr. 9003-39-8;
NaHCO₃: Natriumhydrogencarbonat (reinst), Merck,
CAS-Nr. 144-55-8;
Kieselgel: Kieselgel, Merck, CAS-Nr. 63231-67-4;
Bentonit: Bentonit, Aldrich

### B) Anwendungstests

### a) Sedimentation in Wasser

Zum Einsatz in der Anschwemmfiltration ist eine Sedimentation des als Filterhilfsmittel vorgesehenen Materials in der entsprechenden zu filtrierenden Flüssigkeit und/oder in der für die Voranschwemmung verwendeten Flüssigkeit (üblicherweise Wasser) vorteilhaft. Ein geeigneter Test ist das Sedimentationsverhalten in Wasser.

| **Material** | **Sedimentation in Wasser** |
|---|---|
| Kieselgur¹⁾ | Ja |
| Polystyrol¹⁾ | Nein |
| Material 1a | Ja |
| Material 1c | Ja |
| Material 2a | Ja |
| Material 2d | Nein |
| Material 3a | Ja |
| Material 3d | Nein |
| Material 4a | Ja |
| Material 4c | Ja |
| Material 4e | Ja |
| Material 5a | Ja |
| Material 5c | Nein |
| Material 6a | Ja |
| Material 6c | Ja |
| Material 7b | Ja |
| Material 8a | Ja |
| Material 9b | Ja |
| Material 10b | Ja |
| Material 11a | Ja |
| Material 12a | Ja |
| Material 13b | Ja |
| Material 14a | Ja |
| Material 15b | Ja |
| Material 16b | Ja |
| Material 17b | Ja |
| Material 18b | Ja |

### 1) Vergleichsbeispiel

### b) Filtration einer Standardtrübungslösung

Die Filtrationswirkung wird anhand der Klärung einer Standardtrübungslösung, d.i. eine Formazinlösung mit definierter Trübung, die dem Fachmann zur Charakterisierung von Filterhilfsmitteln für die Getränkeindustrie bekannt ist, in der Anschwemmfiltration beurteilt.

Die Kriterien für ein gutes Testergebnis sind Konstanthalten der Durchflußrate und des Anschwemmdrucks und die Filtrationswirkung, d.i. Klarheit des Filtrats:
der Anschwemmdruck vor und nach dem Filter hat bei gutem Durchfluß den gleichen Wert, d.h. Verstopfen des Filters ist nicht gegeben. Die Trübung wird nach einem Standardtest gemäß EBC (European Brewery Convention) bestimmt. Eine Flüssigkeit wird als klar beurteilt, wenn die Trübungswerte gemäß EBC < 1 sind.

Im folgenden werden Untersuchungen mit den in Abschnitt A beschriebenen Polymerproben beschrieben. Dabei wird bevorzugt die Mahlfraktion mit einer Teilchengröße kleiner als 100 µm eingesetzt.

Die im folgenden gezeigte Tabelle zeigt die Werte nach einem Durchflußvolumen von 5 1, 10 1 und 15 1 für ausgesuchte Proben.

Filtrationswirkung und Durchfluß

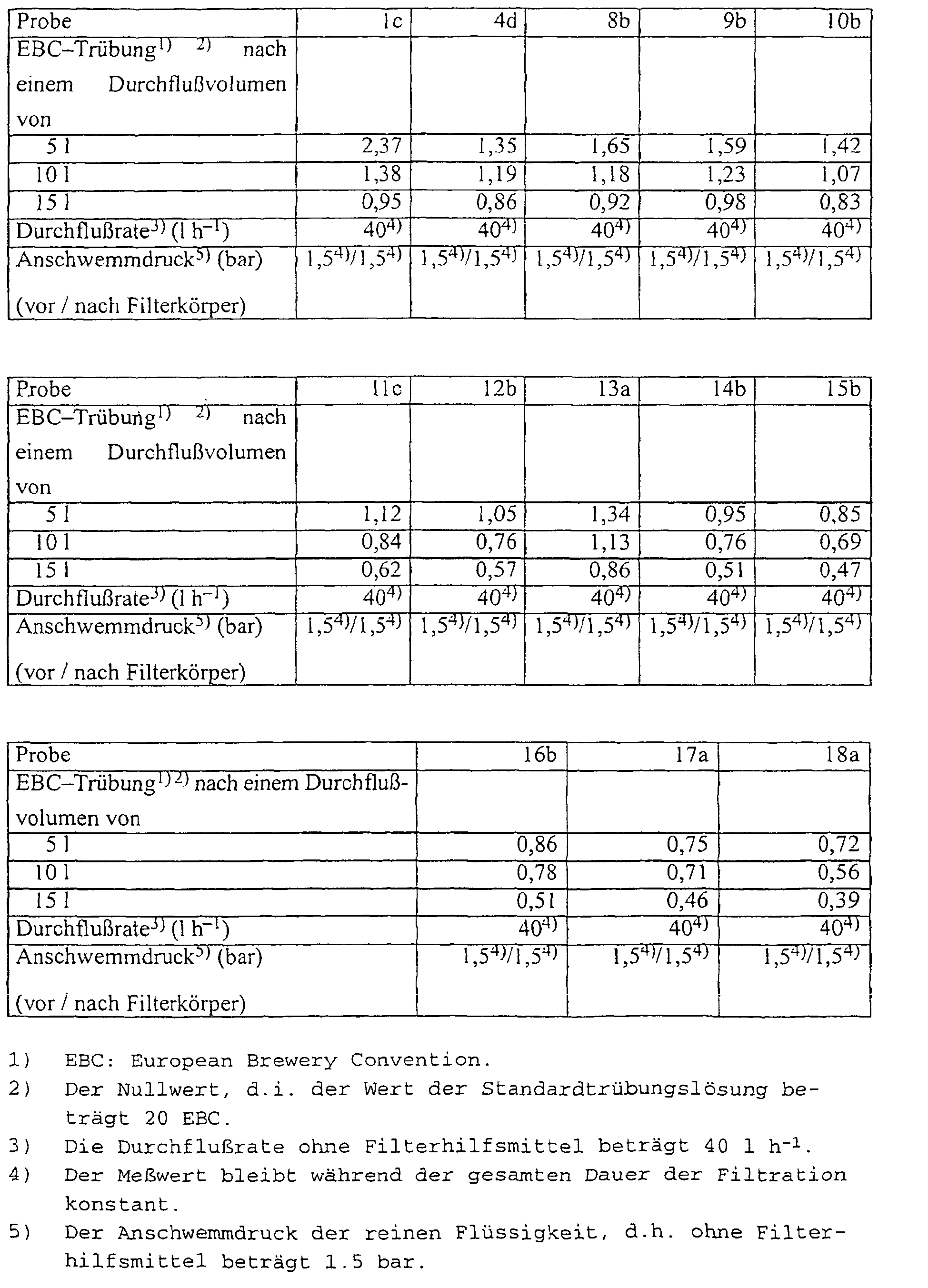

Die im folgenden aufgeführten Stabilisierungsversuche wurden an ausgewählten Beispielen durchgeführt. Dazu wurde im einzelnen wie folgt verfahren:

Im Vorfeld der Analysen wird das Bier durch Rühren entgast (Entcarbonisierung des Biers). Die Drehzahl des Magnetrührers ist so zu wählen, dass kein Luftsauerstoff in das Bier eingearbeitet wird.

### Adsorptionskapazität von PVPP

Einwaage von 20-100 mg PVPP (bezogen auf die Trockensubstanz). Zugabe von 200 ml entkarbonisiertem Bier.
Kontaktzeit beim Rühren exakt 5 Minuten.
Abfiltrieren über Glasfritte.
Filtrat der Tannoid- bzw. Anthocyanogenbestimmung zuführen. Nullbier (Blindwert) entsprechend ohne Zugabe von PVPP.

### Durchführung der Untersuchungen

### Methode zur Bestimmung der Anthocyanogene

G. Harris, R. W. Ricketts: "Studies on non-biological haze...", J. Inst. Brew., Vol. 65, 331-333 (1959), MEBAK, Brautechn. Analysenmethoden, BD II, 3. Aufl., 171-172 (1993), Methodenkorrektur lt. Beschluss der MEBAK vom 22.04.1999.

Die Anthocyanogene werden durch die Überführung in rotgefärbte Anthocyanidine durch heiße Salzsäure photometrisch bestimmt.

### Methode zur Bestimmung der Tannoide

### Tannometer, Fa. Pfeuffer (Trübungstitration)

Der Tannoidgehalt von Bier wird mittels Polyvinylpyrrolidon bestimmt. Über H-Brücken lagern eiweißähnliche Verbindungen Tannoide an. Dadurch entsteht infolge Komplexierung eine Trübung. Im Tannometer wird die Trübung in Abhängigkeit zur zudosierten PVP-Menge gemessen. Das Ergebnis liefert den Tannoidgehalt in mg PVP/l Bier.

Die Berechnung der Adsorptionskapazität von PVPP [%] erfolgt aus den Tannoidwerten.

| | **Antocyanogene [mg/l]** | **Tannoide [PVP/mg/l]** |
|---|---|---|
| Nullbier | 103,75 | 51,56 |
| 25 g/hl Bsp. 4c | 75,88 | 41,3 |
| 50 g/hl Bsp. 4c | 84,15 | 43,92 |
| 75 g/hl Bsp. 4c | 68,97 | 30,99 |
| 100 g/hl Bsp. 4c | 66,89 | 22,7 |
| 125 g/hl Bsp. 4c | 58,58 | 23,55 |
| Divergan F 25 g/hl | 45,29 | 15,13 |

| | **Antocyanogene [mg/l]** | **Tannoide [PVP/mg/l]** |
|---|---|---|
| Nullbier | 85,43 | 45,08 |
| 25 g/hl Bsp. 4d | 81,26 | 43,31 |
| 50 g/hl Bsp. 4d | 75,99 | 36,31 |
| 75 g/hl Bsp. 4d | 71,24 | 33,17 |
| 100 g/hl Bsp. 4d | 75,64 | 30,85 |
| 125 g/hl Bsp. 4d | 70,23 | 31,18 |
| Divergan F 25 g/hl | 41,32 | 16,32 |

## Patentansprüche

1. Verwendung von Compounds enthaltend
(a) 20-95 Gew.-% Polystyrol
(b) -80-5 Gew.-% vernetztes Polyvinylpolypyrrolidon (PVPP), sowie gegebenenfalls weitere Zuschlagsstoffe
als Filterhilfs- und/oder Stabilisierungsmittel zur Filtration und/oder Stabilisierung einer wäßrigen Flüssigkeit.

2. Verwendung von Compounds gemäß Anspruch 1, **dadurch gekennzeichnet, daß** neben der Filtration gleichzeitig eine Stabilisierung der wäßrigen Flüssigkeit stattfindet.

3. Verwendung von Compounds gemäß Anspruch 1 oder 2, **dadurch gekennzeichnet, daß** der unter (b) aufgeführte weitere Stoff ausgewählt ist aus der Gruppe der Alkali- oder Erdalkalicarbonate, der Alkali- oder Erdalkalihydrogencarbonate, der Oxide oder Mischoxide der 4. Nebengruppe oder der 3. Hauptgruppe, der Polyamide, der vernetzten Polyvinyllactame, der Polyvinylamine oder Gemischen davon.

4. Verwendung von Compounds gemäß einem der Ansprüche 1 bis 3, **dadurch gekennzeichnet, daß** der unter (b) aufgeführte weitere Stoff ausgewählt ist aus der Gruppe vernetztes Polyvinylpolypyrrolidon, TiO₂, NaHCO₃, KHCO₃, CaCO₃, Kieselgel, Kieselgur, Diatomeenerde, Bentonit oder Gemischen davon.

5. Verfahren zur Filtration und/oder Stabilisierung einer wäßrigen Flüssigkeit, **dadurch gekennzeichnet, daß** man ein Compound als Filterhilfs- bzw. Stabilisierungsmittel enthaltend
(a) 20-95 Gew.-% Polystyrol
(b) 80-5 Gew.-% vernetztes Polyvinylpolypyrrolidon (PVPP), sowie gegebenenfalls weitere Zuschlagsstoffe, einsetzt.

6. Verfahren gemäß Anspruch 5, **dadurch gekennzeichnet, daß** neben der Filtration auch eine gleichzeitige Stabilisierung des zu filternden Mediums stattfindet.

7. verfahren gemäß einem der Ansprüche 5 oder -6, **dadurch gekennzeichnet, daß** bei der Filtration die Technik der Anschwemmfiltration verwendet wird.

8. Verfahren gemäß einem der Ansprüche 5 bis 7, **dadurch gekennzeichnet, daß** es sich bei der wäßrigen Flüssigkeit um eine Flüssigkeit ausgewählt aus der Gruppe der Fruchtsaft- oder Gärungsgetränke handelt.

9. verfahren gemäß einem der Ansprüche 5 bis 8, **dadurch gekennzeichnet, daß** es sich bei der wäßrigen Flüssigkeit um Bier handelt.

10. Verfahren gemäß einem der Ansprüche 5 bis 9, **dadurch gekennzeichnet, daß** die eingesetzten Compounds eine mittlere Korngröße zwischen 1 und 1000 µm haben.

11. Verfahren gemäß einem der Ansprüche 5 bis 10, **dadurch gekennzeichnet, daß** die Teilchen der eingesetzten Compounds nicht sphäroid sind.

12. Compound enthaltend
(a) 20 bis 95 Gew.-% Polystyrol
(b) 80-5 Gew.-% vernetztes Polyvinylpolypyrrolidon (PVPP), sowie gegebenenfalls weitere Zuschlagsstoffe.

13. Compound gemäß Anspruch 12, enthaltend
(a) 60-90 Gew.-% Polystyrol
(b) 40-10 Gew.-% Polyvinylpolypyrrolidon, sowie gegebenenfalls einen weiteren Zuschlagsstoff.

14. Filterhilfsmittel enthaltend Compounds gemäß einem der Ansprüche 12 oder 13.

15. Stabilisierungsmittel enthaltend Compounds gemäß einem der Ansprüche 12 oder 13.

16. Verfahren zur Herstellung von Compounds gemäß einem der Ansprüche 12 oder 13, **dadurch gekennzeichnet, daß** Polystyrol und Polyvinylpolypyrrolidon in einem Extruder compoundiert werden.

## Claims

1. The use of compounds comprising
a) 20-95% by weight of polystyrene
b) 80-5% by weight of crosslinked polyvinylpolypyrrolidone (PVPP), and if appropriate further added substances
as filter aids and/or stabilizers for filtering and/or stabilizing an aqueous liquid.

2. The use of compounds according to claim 1, wherein, in addition to the filtration, stabilization of the aqueous liquid takes place at the same time.

3. The use of compounds according to either of claims 1 or 2, wherein the further substance set forth under (b) is selected from the group consisting of alkali metal carbonates or alkaline earth metal carbonates, alkali metal hydrogencarbonates or alkaline earth metal hydrogencarbonates, the oxides or mixed oxides of subgroup 4 or main group 3 of the Periodic Table of the Elements, polyamides, crosslinked polyvinyllactams, polyvinylamines or mixtures thereof.

4. The use of compounds according to one of claims 1 to 3, wherein the further substance set forth under (b) is selected from the group consisting of crosslinked polyvinylpolypyrrolidone, TiO₂, NaHCO₃, KHCO₃, CaCO₃, silica gel, kieselguhr, diatomaceous earth, bentonite or mixtures thereof.

5. A process for filtering and/or stabilizing an aqueous liquid, which comprises using as filter aid or stabilizer a compound comprising
(a) 20-95% by weight of polystyrene
(b) 80-5% by weight of crosslinked polyvinylpolypyrrolidone (PVPP), and if appropriate further added substances.

6. The process according to claim 5, wherein, in addition to the filtration, stabilization of the medium to be filtered takes place at the same time.

7. The process according to one of claims 5 or 6, wherein the technique of precoat filtration is used in the filtration.

8. The process according to one of claims 5 to 7, wherein the aqueous liquid is a liquid selected from the group consisting of fruit juice drinks or fermented beverages.

9. The process according to one of claims 5 to 8, wherein the aqueous liquid is beer.

10. The process according to one of claims 5 to 9, wherein the compounds used have a mean particle size from 1 to 1 000 µm.

11. The process according to one of claims 5 to 10, wherein the particles of the compounds used are not spheroidal.

12. A compound comprising
(a) from 20 to 95% by weight of polystyrene
(b) 80-5% by weight of crosslinked polyvinylpolypyrrolidone (PVPP), and if appropriate further added substances.

13. The compound according to claim 12, comprising
(a) 60-90% by weight of polystyrene
(b) 40-10% by weight of polyvinylpolypyrrolidone, and if appropriate a further added substance.

14. A filter aid comprising compounds according to one of claims 12 or 13.

15. A stabilizer comprising compounds according to one of claims 12 or 13.

16. A process for preparing compounds according to one of claims 12 or 13, which comprises compounding polystyrene and polyvinylpolypyrrolidone in an extruder.

## Revendications

1. Utilisation de composés contenant
(a) 20-95 % en poids de polystyrène,
(b) 80-5 % en poids de polyvinylpolypyrrolidone réticulée (PVPP), ainsi qu'éventuellement d'autres matières additionnelles,
comme auxiliaires de filtration et/ou stabilisants pour la filtration et/ou la stabilisation d'un liquide aqueux.

2. Utilisation de composés suivant la revendication 1, **caractérisée en ce que**, en plus de la filtration, il se produit simultanément une stabilisation du liquide aqueux.

3. Utilisation de composés suivant la revendication 1 ou 2, **caractérisée en ce que** l'autre matière indiquée sous (b) est choisie parmi le groupe des carbonates de métal alcalin ou de métal alcalino-terreux, des bicarbonates de métal alcalin ou de métal alcalino-terreux, des oxydes ou oxydes mixtes du quatrième groupe secondaire ou du troisième groupe principal, des polyamides, des polyvinyllactames réticulés, des polyvinylamines ou de leurs mélanges.

4. Utilisation de composés suivant l'une des revendications 1 à 3, **caractérisée en ce que** l'autre matière indiquée sous (b) est choisie parmi le groupe de la polyvinylpolypyrrolidone réticulée, du TiO₂, du NaHCO₃, du KHCO₃, du CaCO₃, du gel de silice, du kieselguhr, de la terre de diatomées, de la bentonite ou de leurs mélanges.

5. Procédé de filtration et/ou de stabilisation d'un liquide aqueux, **caractérisé en ce qu'**on met en oeuvre, comme auxiliaire de filtration et respectivement stabilisant, un composé contenant
(a) 20-95 % en poids de polystyrène,
(b) 80-5 % en poids de polyvinylpolypyrrolidone réticulée (PVPP), ainsi qu'éventuellement d'autres matières additionnelles.

6. Procédé suivant la revendication 5, **caractérisé en ce que**, en plus de la filtration, il se produit aussi une stabilisation simultanée du milieu à filtrer.

7. Procédé suivant l'une des revendications 5 ou 6, **caractérisé en ce que**, lors de la filtration, on utilise la technique de la filtration à couches.

8. Procédé suivant l'une des revendications 5 à 7, **caractérisé en ce que**, pour ce qui concerne le liquide aqueux, il s'agit d'un liquide choisi parmi le groupe des boissons à base de jus de fruits ou des boissons fermentées.

9. Procédé suivant l'une des revendications 5 à 8, **caractérisé en ce que**, pour ce qui concerne le liquide aqueux, il s'agit de bière.

10. Procédé suivant l'une des revendications 5 à 9, **caractérisé en ce que** les composés mis en oeuvre présentent une taille moyenne des grains entre 1 à 1 000 µm.

11. Procédé suivant l'une des revendications 5 à 10, **caractérisé en ce que** les particules des composés mis en oeuvre ne sont pas sphéroïdales.

12. Composé contenant
(a) 20 à 95 % en poids de polystyrène,
(b) 80-5 % en poids de polyvinylpolypyrrolidone réticulée (PVPP), ainsi qu'éventuellement d'autres matières additionnelles.

13. Composé suivant la revendication 12, contenant
(a) 60-90 % en poids de polystyrène,
(b) 40-10 % en poids de polyvinylpolypyrrolidone, ainsi qu'éventuellement d'une autre matière additionnelle.

14. Auxiliaire de filtration contenant des composés suivant l'une des revendications 12 et 13.

15. Stabilisant contenant des composés suivant l'une des revendications 12 et 13.

16. Procédé de préparation de composés suivant l'une des revendications 12 et 13, **caractérisé en ce que** du polystyrène et de la polyvinylpolypyrrolidone sont combinés dans une extrudeuse.
